# EUROPEAN PATENT SPECIFICATION

(11) **EP 4 030 044 B1**
(45) Date of publication and mention of the grant of the patent: **06.11.2024**
(21) Application number: 22150685.0
(22) Date of filing: 10.01.2022
(51) Int. Cl.: F02C 7/262

(54) **AUTOMATED INITIATION OF STARTER MOTOR OPERATION FOR STARTING AN AIRCRAFT ENGINE**
AUTOMATISCHES AUSLÖSEN EINES STARTERMOTORBETRIEBS ZUM STARTEN EINES FLUGZEUGMOTORS
DÉCLENCHEMENT AUTOMATISÉ DU MOTEUR D'UN DÉMARREUR POUR DÉMARRER UN MOTEUR D'AÉRONEF

(30) Priority: 14.01.2021 US 202163137603 P
(43) Date of publication of application: 20.07.2022
(73) Proprietor: The Boeing Company, Arlington, VA 22202 (US)
(72) Inventor: Karnofski, Kent E., Chicago, IL, 60606-2016 (US); Sikora, Joseph A., Chicago, IL, 60606-2016 (US); Shroff, Farhad R., Chicago, IL, 60606-2016 (US)
(74) Representative: Hoffmann Eitle

(56) References cited:
- EP-A1- 3 415 436
- EP-A1- 3 705 702
- EP-A2- 0 856 651
- WO-A1-2017/015341

## Description

### BACKGROUND

The present disclosure relates generally to methods and apparatus for controlling the start of an aircraft engine and, in particular, to methods and apparatus for automated starting of a gas turbine aircraft engine.

The procedure of starting a gas turbine aircraft engine typically requires fuel, pressurized air, and electric power. Typically air from a pressurized air system powers the starter motor. An auxiliary power unit, an external ground cart, or the other operating aircraft engine provides the pressurized air source. The engines may receive fuel by way of an open spar fuel shutoff valve (FSOV) which is mounted in the front wall spar of the main fuel tank supplying fuel to the fuel feed line of the engine, and an open engine FSOV which is located between the engine combustor and the spar FSOV. The spar and engine FSOVs open and close by the same flight deck controls. The spar and engine FSOVs allow fuel flow to the engine when both valves are open.

Many aircraft utilize independent switches for control of the aircraft fuel and the aircraft engine starter systems. The engine start procedure typically consists of two cockpit controls (hardware): a start switch and a fuel lever. The start switch has a "Start" position and an "Off" position. The fuel lever has a "Run" position and a "Cutoff' position. To start the aircraft engine, the operator will move the start switch to the "Start" position and then move the fuel lever to the "Run" position. The valves open when the fuel lever is placed in the "Run" position and close when the fuel lever is placed in the "Cutoff" position.

Typically, the engine start switch uses power to open a starter air valve to allow pressure to rotate a starter motor. The starter motor rotates the core compressor section of the gas turbine engine, part of the "N2" or "N3" rotor shaft depending on the engine configuration, through the accessory drive gear system connected to the N2 or N3 rotor shaft. With the fuel lever in the "Run" position, when the aircraft engine accelerates to a value sufficient to pressurize air within the combustor (e.g. 25% N2 or maximum motoring speed), the electronic engine controller opens the engine fuel shutoff valve and electrically energizes the igniters to supply fuel and ignition to the combustor where the fuel ignites. This causes the acceleration of all rotor sections of the gas turbine engine toward a sustainable idle speed. At starter cutout speed (e.g., approximately 56% N2), power is removed from the start switch holding solenoid. The starter air valve closes.

The above-described legacy configuration is based on current generation automatic engine starting systems where the controller automatically sequences the fuel and ignition, when enabled by the fuel lever, but where the operator is needed to initiate operation of the engine starter motor operation. In particular, for in-flight restarting of an engine that is no longer running, the operator must determine whether starter motor operation is needed (a.k.a. starter-assisted start) or whether the start sequence should be conducted without the starter motor (a.k.a. windmill start) and operate the start switch accordingly.

EP 0 856 651 A2 relates to gas turbine engines, and particularly to a method for reliably starting an aircraft gas turbine by judiciously managing the introduction of fuel during the engine start sequence.

EP 3 705 702 A1 relates generally to engine operation, and more particularly to techniques for reigniting engines.

EP 3 415 436 A1 relates generally to a hybrid-electric aircraft propulsion system, and a method for starting a turbomachine within the hybrid-electric air-craft propulsion system.

WO 2017/015341 relates generally to engine starting systems, and in particular to a control system for restarting a rotorcraft engine while the rotorcraft is in flight.

### SUMMARY

The present invention is defined by the independent claims. Preferred embodiments are defined by the dependent claims. Further examples are provided for facilitating the understanding of the invention. The subject matter disclosed in some detail below is generally directed to systems and methods for automated control of starter motor operation for starting a gas turbine aircraft engine. More specifically, the technology proposed herein enables automated initiation of starter motor operation for starting an aircraft engine. The proposed systems and methods employ schemes to initiate fully automated engine starting using a single flight deck control input device (hereinafter "operator control input device"). The proposed flight deck configurations involve software algorithms to be coded into aircraft systems and/or electronic engine control (hereinafter "controller logic") to complete the system. Reduced manufacturing costs and simplified flight crew procedures are realized, as well as optimized starting performance for engine restarting in flight. The single-control-input hardware scheme proposed herein may satisfy all requirements for both pilot and mechanic use cases.
Many existing aircraft utilize independent switches for control of the aircraft fuel and the aircraft engine starter systems. This disclosure proposes a single-switch configuration (hereinafter "engine control switch") and implementation of new controller logic so that these functions can be combined into a single control. In accordance with some embodiments, the engine start switch is a three-position switch that incorporates multiple functions, to wit, "Run", "Off", and "Motor". Multiple designs may be considered for achieving aircraft electric power switching. Any chosen switch mechanism retains an "over-center" feature, which ensures that the switch can only be in one of the three distinct positions. In one embodiment, the center position corresponds to the "Off" function. When the switch is in a "Run" position and the engine stops running in flight, the controller is configured to automatically initiate operation of the starter motor if other specified conditions are also met. The controller is also configured to automatically initiate operation of the starter motor when the operator moves the switch from an "Off" position to the "Run" position while the aircraft is on ground, again with the proviso that other specified conditions be met.

More specifically, when the engine start switch is in a "Run" position, electric power is provided to the controller and enabled for the controller to provide to the ignitors when specified conditions are met; the controller instructs an auxiliary power unit (APU) or other air source to configure for engine start; and the spar and engine FSOVs and starter air valve are commanded open when specified conditions are met. The controller then begins to execute an engine start routine. The controller logic will control all aspects of the engine start process until engine start is complete or the engine start is aborted. When the switch is in an "Off" position, electrical power commands the spar and engine FSOVs closed while other power is removed. When the switch is in a "Motor" position: electric power is provided to the controller; the controller instructs the APU or other air source to configure for engine start; and the controller commands the starter air valve open. The "Motor" position is used primarily in case of engine tailpipe fire. This position is not for starting, but would instruct the engine to dry motor; specifically, to rotate the engine rapidly with no fuel or ignition provided to initiate engine starting. The dry motor process is the same as the engine start process except that fuel and ignition are not added. The engine's air-powered starter motor will spin the core up to max motoring speed during this procedure.

The technology disclosed herein includes innovative controller logic for engine starting both on ground and in flight. On ground or in flight, the controller will interpret movement of the engine control switch from the "Off" position (setting) to the "Run" position (setting) as a "start engine" command. In addition or in the alternative, in flight the controller will have logic configured to receive a signal indicating that the engine is not running while the "Run" setting persists and then automatically initiate operation of the starter motor in response to receipt of that signal if specified conditions for starter operation are met.

Although various embodiments of systems and methods for automated initiation of starter motor operation for starting an aircraft engine will be described in some detail below, one or more of those embodiments may be characterized by one or more of the following aspects. Also note that some aircraft engine configurations utilize an electrically powered starter motor instead of a high-pressure pneumatic air-driven starter motor. On these aircraft, the systems and methods for automated initiation of starter motor operation would function in the same manner, with the only difference being the power type and the motor type used in the system.

### BRIEF DESCRIPTION OF THE DRAWINGS

The features, functions and advantages discussed in the preceding section may be achieved independently in various embodiments or may be combined in yet other embodiments. Various embodiments will be hereinafter described with reference to drawings for the purpose of illustrating the above-described and other aspects. None of the diagrams briefly described in this section are drawn to scale.
FIG. 1 is a diagram representing a front view of an aircraft in accordance with one embodiment.
FIG. 2 is a block diagram identifying some components and subsystems of a system for starting an aircraft engine in which operation of the starter motor is not initiated automatically.
FIG. 3 is a block diagram identifying some components and subsystems of a system for starting an aircraft engine in which operation of the starter motor is initiated automatically.
FIG. 4 is a flowchart identifying steps of a method for automated control of starting an engine while an aircraft is in flight.
FIG. 5 is a flowchart identifying steps of a method for automated control of starting an engine while an aircraft is on ground.

Reference will hereinafter be made to the drawings in which similar elements in different drawings bear the same reference numerals.

### DETAILED DESCRIPTION

Illustrative embodiments of systems and methods for automated initiation of starter motor operation for starting an aircraft engine are described in some detail below. However, not all features of an actual implementation are described in this specification. A person skilled in the art will appreciate that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

The following disclosure describes systems and methods for automated control of gas turbine aircraft engine starting. Certain specific details are set forth in the following description to provide a thorough understanding of various embodiments. Well-known structures, systems and methods often associated with starting an aircraft engine have been either not shown or not described in detail below to avoid unnecessarily obscuring the description of the various embodiments. In addition, those of ordinary skill in the pertinent art will understand that additional embodiments may be practiced without several of the details described below.

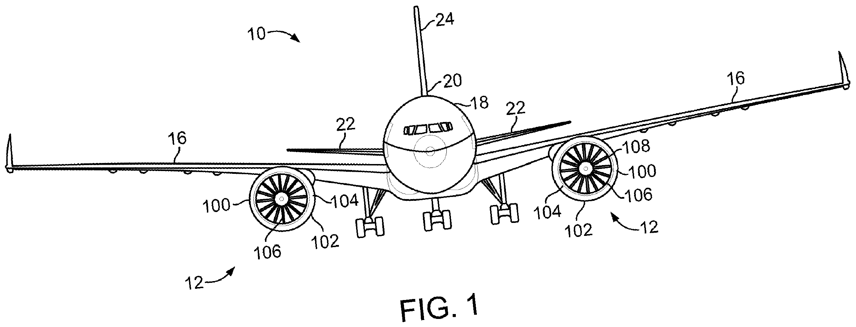

FIG. 1 is a diagrammatic representation of a front view of an aircraft 10 that includes a propulsion system 12 comprising two aircraft engines 100. Optionally, the propulsion system 12 may include more engines than shown. The aircraft engines 100 are mounted to respective wings 16 of the aircraft 10. In other embodiments, the aircraft engines 100 may be carried by a fuselage 18 and/or an empennage 20. The empennage 20 includes a horizontal stabilizer 22 and a vertical stabilizer 24. Each aircraft engine 100 includes a housing 102 that has an inlet assembly 104. The housing 102 retains a fan 106 proximate to a leading end 108 and an engine core (not shown in FIG. 1) set back from the fan 106.

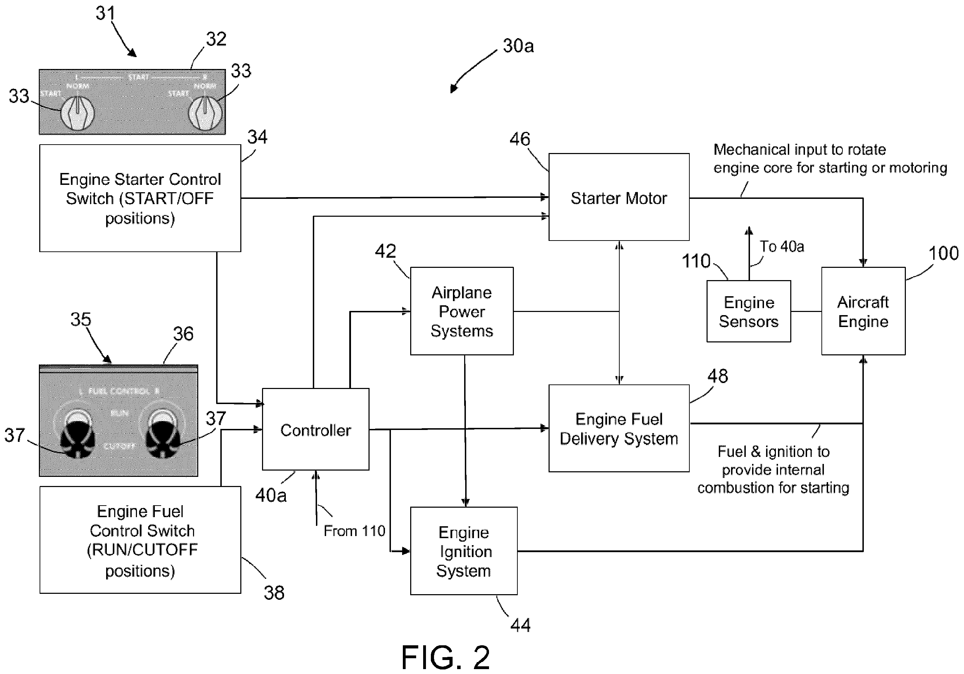

FIG. 2 is a block diagram identifying some components and subsystems of a known system 30a for starting an aircraft engine 100. For example, the aircraft engine 100 may be an axial-flow turbofan engine having independent rotating shafts each with a compressor section and a turbine section. In a typical aircraft engine configuration there are two concentrically rotating shafts typically referred to as the N1 and N2 rotors. There are other aircraft engine configurations, with different numbers of or references to the rotating shafts, but the relation of an engine starting system to one or more of these rotors is similar to the following description. The engine core is typically the N2 rotor and consists of a rotating shaft with a compressor section at the front of the shaft and a turbine section at the aft end of the shaft. The engine combustor is located between the N2 compressor section and N2 turbine section. The engine combustor receives the compressed air from the N2 compressor section, provides fuel and ignition for combustion, and the resulting hot combustion gasses flow through and rotate the turbine sections of the N2 and then N1 rotors. In a typical aircraft engine configuration a starter motor is connected to the core section rotor, typically the N2 rotor in a two-rotor aircraft engine configuration, through a gearbox. The system 30a is configured to require separate operator-selectable control inputs for starting aircraft engine 100: one operator-selectable control input for causing the N2 compressor (not shown in FIG. 2) of aircraft engine 100 to rotate and another operator-selectable control input to provide fuel and ignition to aircraft engine 100 while the N2 compressor is rotating.

The system 30a includes an electronic engine controller 40a (hereinafter "controller 40a") which is configured to control starting and operation of the aircraft engine 100. The system further includes airplane power systems 42, an engine ignition system 44, a starter motor 46, and an engine fuel delivery system 48. The controller 40a is communicatively coupled to airplane power systems 42, engine ignition system 44, starter motor 46, and engine fuel delivery system 48. The controller 40a is configured to send control signals to airplane power systems 42, engine ignition system 44, starter motor 46, and engine fuel delivery system 48 to enable automated starting of aircraft engine 100. The starter motor 46 may be air-powered of electrically powered depending on the aircraft and engine designs.

The aircraft engine 100 includes a combustor (not shown in FIG. 2) that may be secured to an outer portion of the engine core. The combustor includes an air inlet, fuel nozzles, and ignitors which are configured to ignite fuel in response to ignition signals from controller 40a. The controller 40a is further configured to monitor the temperature of the burning fuel within the combustor, such as through one or more combustion sensors (for example, a pressure transducer) and/or temperature sensors (for example, a thermometer, thermostat, or the like). The combustor also includes a gas outlet.

For in-flight starting, the rotation of the engine core may be sufficient due to the airflow from a windmilling engine without invoking the starter motor 46 (a.k.a. windmill start); if not, then the starter motor 46 must be used in flight for starting (a.k.a. starter-assisted start).

The system 30a further includes an operator starter control input device 31 for selecting activation of respective starter motors associated with a pair of aircraft engines 100. The operator starter control input device 31 includes a starter control panel 32 and an engine starter control switch 34. The starter control panel 32 includes a pair of manually operable mechanical elements 33 (one per engine) each having two positions: a Start position and an "Off" position. In the example implementation depicted in FIG. 2, the manually operable mechanical elements 33 are rotary knobs. In alternative implementations, manually operable mechanical elements 33 may be levers or pushbuttons. Each manually operable mechanical element 33 is connected to a movable part of the respective engine starter control switch 34. In accordance with some implementations, when a manually operable mechanical element 33 is moved from the "Off" position to the "Start" position by the operator, the associated engine starter control switch 34 closes and sends an "enable start motor" command to starter motor 46. In accordance with other implementations, closure of engine starter control switch 34 sends an "enable start motor" command to controller 40a, which then sends a control signal to enable the starter motor 46, thereby allowing air or electrical power to turn the motor. The controller 40a is configured to send control signals instructing airplane power systems 42 to provide electric power to engine ignition system 44, starter motor 46, and engine fuel delivery system 48 in response to receipt of the enable start motor command to commence the automated engine start routine.

The system 30a further includes an operator fuel control input device 35 for selecting activation of respective engine fuel delivery systems associated with a pair of aircraft engines 100. The operator fuel control input device 35 includes a fuel control panel 36 and an engine fuel control switch 38. The fuel control panel 36 includes a pair of manually operable mechanical elements 37 (one per engine) each having two positions: a "Run" position and a "Cutoff" position. In the example implementation depicted in FIG. 2, the manually operable mechanical elements 37 are levers. In alternative implementations, manually operable mechanical elements 37 may be rotary knobs or pushbuttons. Each manually operable mechanical element 37 is connected to a movable part of the respective fuel control switch 38. When a manually operable mechanical element 37 is moved from the "Cutoff" position to the "Run" position by the operator, engine fuel control switch 38 sends a "fuel delivery" command to controller 40a. The controller 40a is further configured to send control signals to engine fuel delivery system 48 for regulating the delivery of fuel to aircraft engine 100 and control signals to the engine ignition system 44 for energizing the igniters while the starter motor is operating. As a result of these actions, fuel is delivered to the combustor of aircraft engine 100 and ignited while the N2 compressor (not shown in FIG. 2) of aircraft engine 100 is rotating. When the N2 speed has reached a threshold value, controller 40a sends a control signal that causes starter motor 46 to cease operation.

In accordance with the system depicted in FIG. 2, fuel delivery and ignition are automated when enabled by the operator, but the operation of the starter motor 46 to initiate engine start is not automated. Instead the initiation of starter motor operation is the result of a flight crew command. In contrast, the innovative technology proposed in this disclosure is focused on automated initiation of the operation of the starter motor in response to detection of a specified state. The specified state may include a state wherein the engine has stopped running in flight or a state wherein the operator has manipulated an operator control input device to select a Run setting while the aircraft is on ground or in flight.

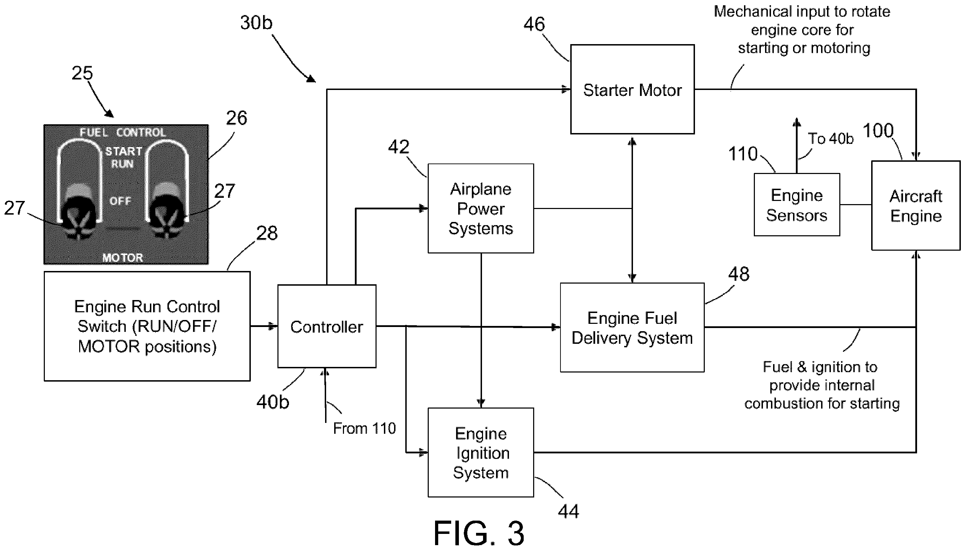

In accordance with the system 30b depicted in FIG. 3, the operation (selection) of the starter motor to initiate an engine start is automated (both in flight and on ground, but more relevant in flight, where today the flight crew has to make a decision and take an action for whether to use the starter (starter-assisted start) or not (windmill start)). Because the initiation of starter motor operation, fuel delivery, and fuel ignition are all automated, there is no need to have two operator control input devices (one for start and another for fuel) per engine. The automated operation of the starter is enabled by an operator (flight crew) control input; fuel and ignition are automatically provided as enabled by that same operator-selectable control input (same control setting) with no additional operator input. The same operator control input device can also be used to discontinue starter operation and fuel and ignition. In addition, means for the crew to operate the starter independent of engine starting (e.g., dry motoring) are provided. The latter means can be incorporated into one operator control input device which is settable to any one of three positions: an "Off" position, a "Run" position, and a "Motor" position. Note that in other embodiments the "Motor" selection may be incorporated into a separate control, only used to operate the starter motor for uses other than engine starting, a.k.a. dry motoring.

FIG. 3 is a block diagram identifying some components and subsystems of a system 30b for starting an aircraft engine 100 in which operation of the starter motor 46 is initiated automatically. The system 30b includes an operator control input device 25 located on a flight deck of the aircraft. In accordance with one embodiment, the operator control input device 25 enables the operator to select activation of a starter motor 46 associated with an aircraft engine 100. The operator control input device 25 includes an engine control panel 26 and an engine run control switch 28. The engine control panel 26 includes a pair of manually operable mechanical elements 27 (one per engine) each having three positions: a "Run" position, an "Off" position, and a "Motor" position. In the example implementation depicted in FIG. 3, each manually operable mechanical element 27 is a lever having three positions along a straight line, with the "Off" position in the center. In an alternative implementation, the engine control panel 26 may be designed so that the manually operable mechanical element 27 is movable along either of two mutually orthogonal slots which intersect at the center position, thereby providing three distinct positions at three corners of a hypothetical rectangle. In alternative implementations, manually operable mechanical elements may be rotary knobs having three angular positions. In most instances it is desired for one or more detent positions to be provided, so that the actuating lever is biased to one or more positions from which it will not deviate unless moved manually by the operator.

Each manually operable mechanical element 27 carries a movable part of the associated engine run control switch 28, which has three switch states corresponding to the "Run", "Off", and "Motor" positions, respectively. For example, the manually operable mechanical element 27 may be in the form of an actuating lever that swings in one plane with a rear end portion which carries a magnet which is moved into and out of close proximity to a current sensor. The operator may select automated engine start (including automated initiation of starter motor operation) by moving the manually operable mechanical element 27 from the "Off" position to the "Run" position. To abort an engine start attempt (ground or air), the operator moves manually operable mechanical element 27 to the "Off" position. In flight, to clear an engine stall or surge, or attempt to clear other non-normal engine operation, the operator moves manually operable mechanical element 27 to the "Off" position and then returns manually operable mechanical element 27 to the "Run" position. To dry motor the aircraft engine 100, in case of tailpipe fire or engine cooling procedure, the operator moves manually operable mechanical element 27 to the "Motor" position.

The system 30b further includes an electronic engine controller 40b (hereinafter "controller 40b") which is configured to enable fully automated starting of aircraft engine 100 in response to the operator moving manually operable mechanical element 27 from the "Off" position to the "Run" position. Each manually operable mechanical element 27 is connected to a movable part of the associated engine run control switch 28. When manually operable mechanical element 27 is moved from the "Off" position to the "Run" position by the operator, the associated engine run control switch 28 outputs a signal which controller 40b treats as an "engine start" command. The controller 40b is configured to commence an automated engine start routine in response to receipt of the "engine start" command.

In accordance with one embodiment of the automated engine start routine, the controller 40b sends a control signal instructing airplane power systems 42 to provide electric power to engine ignition system 44, starter motor 46, and engine fuel delivery system 48. Controller 40b also sends a control signal to the starter motor 46 to enable a motive force to turn the starter motor and subsequently the core of the engine. In one proposed implementation, controller 40b causes the compressor of aircraft engine 100 to rotate with increasing speed until a specified threshold value is exceeded. In accordance with different implementations, the starter motor 46 may be a hydraulic motor, a pneumatic motor, or an electric motor. The starter motor 46 provides power to a driveshaft that drives the compressor to rotate at increasing speed until the engine core can compress air enough to sustain combustion. During automated starting, an engine sensor 110 (e.g., a core rotational speed sensor) detects the speed of rotation of the N2 rotor and reports that information to controller 40b. The controller 40b is further configured to output control signals engine fuel delivery system 48 and engine ignition system 44 to initiate fuel delivery and fuel ignition while the N2 compressor is rotating at an N2 speed in excess of the specified threshold value.

In flight, given a command to start the engine, the controller 40b will have logic incorporated to select either a windmill start (preferred) or a starter-assisted start. The controller 40b will select a windmill start if airplane speed is above a threshold value (typically 250-300 kts) by setting the fuel metering valve for an appropriate fuel schedule and energizing both ignitors. The controller 40b will select a starter-assisted start if the airplane airspeed is below a threshold value (typically 220 kts) by operating the starter and with an appropriate N2 (core) rotational speed, regulating fuel flow and energizing both ignitors. In addition, controller 40b is configured to automatically initiate operation of the starter motor 46 if the sensed power available to operate the starter motor is above a specified threshold value. The control of the starter (not shown in FIG. 3) is an autonomous function, not a crew action.

After a specified first duration of an unsuccessful windmill start attempt, or if the N2 rotor does not achieve sufficient rotational speed after a specified second duration (less than the first duration) of an unsuccessful windmill start attempt, the controller 40b will notify the engine-indicating and crew-alerting system (EICAS), which then indicates that the flight crew should increase airplane air speed, even if the speed indication is above the specified threshold value. This is in case of a latent/unknown failure in the engine starter system or the airplane air data system. In accordance with the above-described crew procedure for in-air start, the EICAS will also indicate that the controller 40b is attempting to restart an engine. Moreover, the EICAS will provide an indication of the windmill start envelope for crew information. If the aircraft air speed should be increased to enhance the likelihood of a successful in-air engine start, the EICAS will provide appropriate instruction/indication to the flight crew.

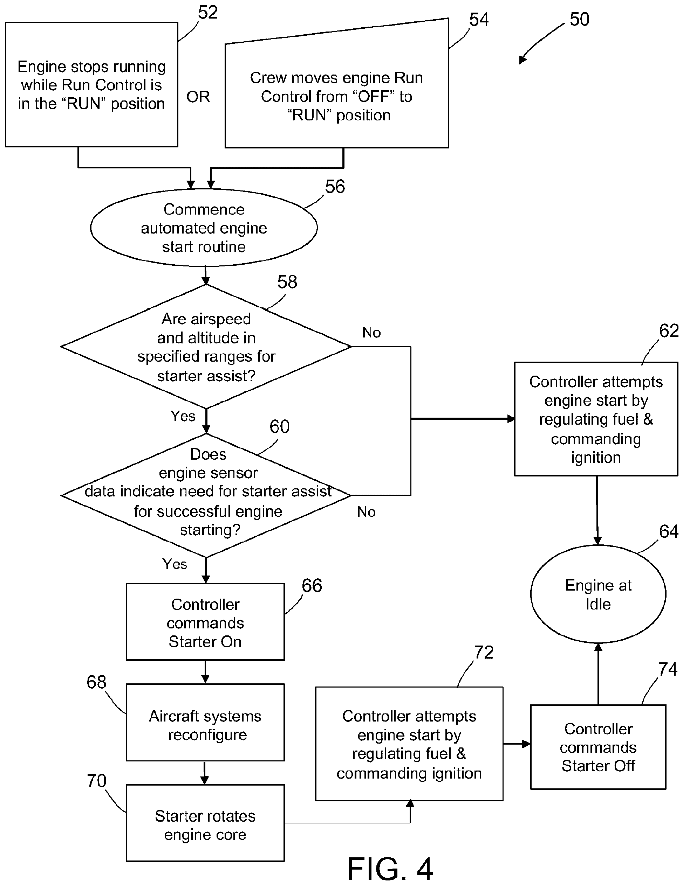

FIG. 4 is a flowchart identifying steps of a method 50 for automated control of starting an engine while an aircraft is in flight. In accordance with one implementation, method 50 begins in response to the occurrence of either one of the following two events: (a) the aircraft engine 100 stops running while the operator control input device 25 is set to the "Run" position (event 52) or (b) the operator (e.g., crew member) changes the setting of operator control input device 25 from the "Off" position to the "Run" position. The controller 40b is configured to commence an automated engine start routine (step 56) in response to either of events 52 and 54 while the aircraft engine is not running.

The controller 40b is further configured to determine whether the current airspeed and altitude of the aircraft are within respective specified ranges for starter assist or not (step 58). On the one hand, if a determination is made in step 58 that the current airspeed and altitude of the aircraft are not both within the respective specified ranges where starter assistance is necessary, then controller 40b attempts to start the engine (without assistance from the starter) by regulating the fuel being supplied to the combustor and commanding ignition (step 62). If the engine start attempt is successful, then the engine runs at idle speed (step 64). On the other hand, if a determination is made in step 58 that the current airspeed and altitude of the aircraft are both within the respective specified ranges for starter assistance, then controller 40b is further configured to determine whether the data received from engine sensors 110 (hereinafter "engine sensor data") indicates the need for starter assistance for successful engine starting or not (step 60).

On the one hand, if a determination is made in step 60 that the engine sensor data indicates that starter assistance is not needed, then controller 40b attempts to start the engine (without starter assistance) by regulating the fuel being supplied to the combustor and commanding ignition (step 62). If the engine start attempt is successful, then the engine runs at idle speed (step 64). On the other hand, if a determination is made in step 60 that the engine sensor data indicates that starter assistance is needed, then controller 40b commands the starter motor 46 to initiate operation (step 66). More specifically, controller 40b commands the starter air valve open. Controller 40b also issues control signals that initiate reconfiguration of other aircraft systems (step 68). For example, the environmental control system and auxiliary power unit configures for engine start. In the meantime, the EICAS indicates the "engine start" mode is active on the EICAS display. Opening of the starter air valve causes the starter motor 46 to drive rotation of the N2 rotor of the engine core (step 70).

The controller 40b monitors the N2 speed (core rotational speed) as that speed increases. More specifically, the controller 40b compares N2 speed data received from the core rotational speed sensor with a specified threshold value stored in a non-transitory tangible computer-readable storage medium. When the N2 speed exceeds the specified threshold value, controller 40b attempts to start the engine (with starter assistance) by regulating the fuel being supplied to the combustor and commanding ignition (step 72). More specifically, controller 40b commands the spar and engine FSOVs open in response to N2 speed reaching a first threshold value and then modulates the flow of fuel through the fuel metering device. The controller 40b also commands that power be supplied to the ignitors in response to N2 speed reaching the first threshold value. The controller 40b is configured to automatically provide fuel and ignition to the aircraft engine for engine starting with no additional operator input while the starter motor 46 is operating. The controller 40b continues to monitor the increasing N2 speed. When the N2 speed reaches a second threshold value greater than the first threshold value, the controller 40b commands the starter motor to cease operation (step 74). More specifically, controller 40b commands the starter air valve closed. In response to that command, the EICAS indicates on the EICAS display that the engine is running at idle speed and the environment control system proceeds to reconfigure. This completes the engine start sequence.

To summarize the methodology depicted in FIG. 4, using available airspeed and altitude data, the controller 40b determines which one of two starting methods should be used: a windmill start or a starter-assisted start. A windmill start involves increasing airspeed to windmill the blades of the core engine and then igniting the mixture of fuel and pressurized air inside the combustor. As previously described, controller 40b will select a windmill start if airplane speed is above a threshold value (typically 220 kts) or will select a starter-assisted start if the airplane airspeed is below that same threshold value. On the one hand, if a starter-assisted start is selected, controller 40b commands the starter air valve open and the environmental system reconfigures. On the other hand, if a windmill start is selected, the starter air valve is not opened. Then the engine is started by generating aerodynamic forces that increase the speed of rotation of the core of the engine that is not running.

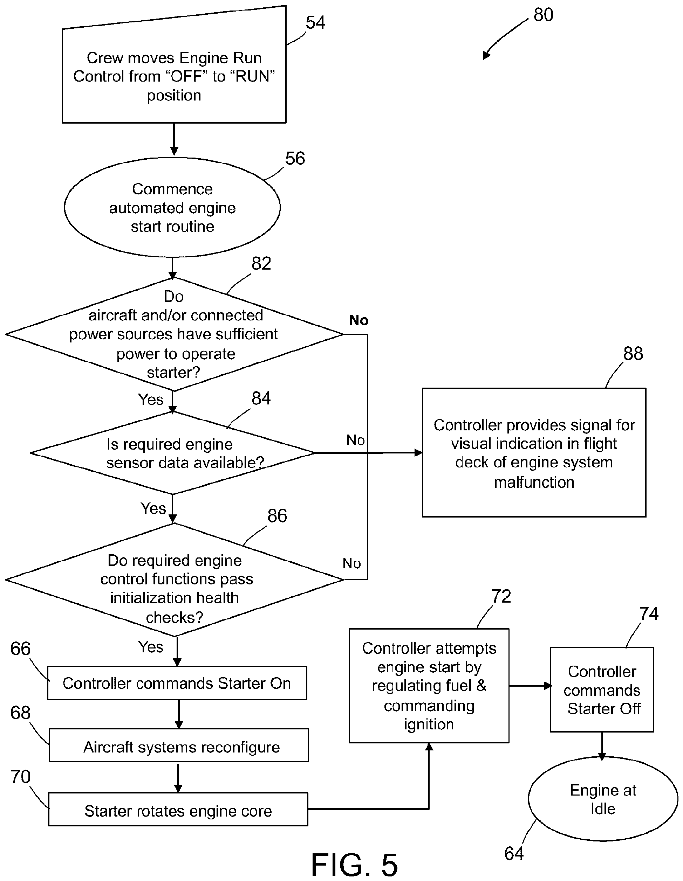

FIG. 5 is a flowchart identifying steps of a method 80 for automated control of starting an engine while an aircraft is on ground. In accordance with one implementation, method 80 begins in response to the operator (e.g., crew member) changing the setting of operator control input device 25 from the "Off" position to the "Run" position (event 54). The controller 40b is configured to commence an automated engine start routine (step 56) in response to event 54 while the aircraft is on ground and the aircraft engine 100 is not running.

The controller 40b is further configured to determine whether the aircraft and/or connected power sources have sufficient power to operate the starter motor 46 or not (step 82). On the one hand, if a determination is made in step 82 that the sensed power available to operate the starter motor is not above a specified threshold value (insufficient power is available to operate the starter motor 46), then controller 40b generates a signal instructing the EICAS to provide an indication prompt (e.g., a visual indication) alerting the operator to the existence of an engine system malfunction (step 88). On the other hand, if a determination is made in step 82 that sufficient power is available to operate the starter motor 46, then controller 40b is further configured to determine whether required engine sensor data is available or not (step 84).

On the one hand, if a determination is made in step 84 that the required engine sensor data is not available, then controller 40b generates a signal instructing the EICAS to provide an indication prompt alerting the operator of an engine system malfunction (step 88). On the other hand, if a determination is made in step 84 that the required engine sensor data is available, then controller 40b is further configured to determine whether required engine control functions pass initialization health checks or not (step 86). More specifically, the controller 40b is configured to automatically initiate operation of the starter motor on ground if one or more of the following health checks are passed: engine sensor data, engine starter motor, engine fuel delivery system, engine ignition system, and/or engine controller function.

On the one hand, if a determination is made in step 86 that the required engine control functions did not pass the initialization health checks, then controller 40b generates a signal instructing the EICAS to provide an indication prompt alerting the operator of an engine system malfunction (step 88). On the other hand, if a determination is made in step 86 that the required engine control functions passed the initialization health checks, then controller 40b commands the starter motor 46 to initiate operation (step 66).

In addition, controller 40b issues control signals that initiate reconfiguration of other aircraft systems (step 68). Opening of the starter air valve causes the starter motor 46 to drive rotation of the N2 rotor of the engine core (step 70). The controller 40b monitors the N2 speed (core rotational speed) as that speed increases. When the N2 speed exceeds the specified threshold value, controller 40b attempts to start the engine (with starter assistance) by regulating the fuel being supplied to the combustor and commanding ignition (step 72), as previously described with reference to FIG. 4. When the N2 speed reaches a second threshold value greater than the first threshold value, the controller 40b commands the starter motor to cease operation (step 74). Following cessation of starter motor operation, the aircraft engine 100 is running at idle speed (step 64). This completes the engine start sequence.

In summary, the controller 40b is configured to automatically initiate operation of the starter motor 46 as needed to start the aircraft engine 100 while the aircraft engine 100 is not running. In accordance with one embodiment, controller 40b is configured to operate in either of two modes: a first mode in which the controller 40b automatically initiates operation of the starter motor 46 for an aircraft engine 100 that is not running while the aircraft is in flight or a second mode in which the controller 40b automatically initiates operation of the starter motor 46 for an aircraft engine 100 that is not running while the aircraft is on ground. The first mode may be enabled either upon reception of a specified operator-selectable control input indicating that the setting on an operator control input device 25 has been changed from "Off" to "Run" or detection that the aircraft engine 100 is not running while the operator control input device 25 is still set to "Run". In addition, the controller 40b is configured to automatically provide fuel and ignition to the aircraft engine 100 for engine starting by the same single setting of the operator control input device 25 (with no additional operator input) while the starter motor 46 is operating. Optionally, the controller 40b has a third mode in which the controller 40b initiates operation of the starter motor 46, but disables the providing of fuel and ignition to the aircraft engine 100, based on an input received from the operator control input device 25. The controller 40b may also be configured to automatically stop the operation of the starter motor 46 with no additional operator input when the started aircraft engine reaches idle speed.

In summary, a system has been proposed that includes an electronic engine controller which is configured with software intelligence for controlling the entire start sequence, thereby enabling a single "start engine" control and command. The substitution of one switch in place of two switches has the benefit of reducing the amount of flight deck hardware, and simplifying flight crew workload and optimizing engine starting performance, in particular, for in-flight starting.

While systems and methods for automated initiation of starter motor operation for starting an aircraft engine have been described with reference to various embodiments, it will be understood by those skilled in the art that various changes may be made and equivalents may be substituted for elements thereof without departing from the teachings herein. In addition, many modifications may be made to adapt the concepts and reductions to practice disclosed herein to a particular situation. Accordingly, it is intended that the subject matter covered by the claims not be limited to the disclosed embodiments.

As used in the claims, the term "controller" should be construed broadly to encompass a system having at least one computer or processor, and which may have multiple computers or processors that communicate through a network or digital bus. As used in the preceding sentence, the terms "computer" and "processor" both refer to devices having a processing unit (e.g., a central processing unit) and some form of memory (i.e., computer-readable medium) for storing a program which is readable by the processing unit. For example, the term "controller" includes, but is not limited to, a small computer on an integrated circuit containing a processor core, memory and programmable input/output peripherals. A processor may be one of the following types: a central processing unit, a microcontroller, a reduced instruction set computer processor, an application-specific integrated circuit, a programmable logic circuit, a field-programmable gated array, a digital signal processor, and/or any other signal or data processing circuitry or device capable of executing the functions described herein.

The automated methods described herein may be encoded as executable instructions embodied in a non-transitory tangible computer-readable storage medium, including, without limitation, a storage device and/or a memory device. Such instructions, when executed by a processing or computing system, cause the system device to perform at least a portion of the methods described herein.

In the method claims appended hereto, any alphabetic ordering of steps is for the sole purpose of enabling subsequent short-hand references to antecedent steps and not for the purpose of limiting the scope of the claim to require that the method steps be performed in alphabetic order.

## Claims

1. A system comprising an aircraft engine (100), a starter motor (46), an engine fuel delivery system (48), an engine ignition system (44), and a controller (40b) communicatively coupled to the starter motor (46), engine fuel delivery system (48), engine ignition system (44) and an operator control input device (25) coupled to the controller (40b), the controller (40b) being configured to automatically initiate operation of the starter motor (46) as needed to start the aircraft engine (100) while the aircraft engine is not running,
wherein the controller (40b) has a first mode in which the controller automatically initiates operation of the starter motor (46) and automatically provides fuel and ignition to the aircraft engine (100), and wherein the controller (40b) has a second mode in which the controller (40b) stops the operation of the starter motor (46) and stops fuel and ignition from being provided to the aircraft engine (100) based on an operator-selectable control input received from the operator control input device (25), wherein the operator control input device (25) has one setting corresponding to the first mode, another setting corresponding to the second mode, and a third mode in which the controller (40b) initiates operation of the starter motor (46), but disables the providing of fuel and ignition to the aircraft engine (100), based on an input received from the operator control input device (25), and wherein the operator control input device (25) has respective settings corresponding to the first, second, and third modes.

2. The system as recited in claim 1, wherein the controller is configured to automatically initiate operation of the starter motor (46) when enabled by an operator-selectable control input received from the operator control input device (25).

3. The system as recited in one of claims 1-2, wherein the controller (40b) is configured to automatically initiate operation of the starter motor (46) for the aircraft engine (100) that is not running in flight.

4. The system as recited in one of claims 1-3, wherein the controller (40b) is configured to automatically initiate operation of the starter motor (46) in flight based on airspeed and altitude being within respective specified ranges.

5. The system as recited in one of claims 1-4, wherein the controller (40b) is configured to automatically initiate operation of the starter motor (46) in flight if engine sensor data is not within a specified range before an engine start is in progress or while an engine start is in progress and the starter motor (46) is not currently operating.

6. The system as recited in one of claims 1-5, wherein the controller (40b) is configured to automatically operate the starter motor (46) on ground.

7. The system as recited in one of claims 1-6, wherein the controller (40b) is configured to automatically initiate operation of the starter motor (46) on ground if the sensed power available to operate the starter motor (46) is above a threshold value, and wherein an operator is provided an indication prompt if the sensed power available to operate the starter motor (46) is not above the threshold value.

8. The system as recited in one of claims 1-7, wherein the controller (40b) is configured to automatically initiate operation of the starter motor (46) on ground if one or more of the following health checks are passed: engine sensor data, engine starter motor (46), engine fuel delivery system (48), engine ignition system (44), and/or engine controller function further wherein an operator is provided an indication prompt if any health check needed to initiate engine starting is not passed.

9. The system as recited in one of claims 1-8, wherein the controller (40b) is configured to automatically provide fuel and ignition to the aircraft engine (100) for engine starting with no additional operator input while the starter motor (46) is operating.

10. The system as recited in one of claims 1-9, wherein the controller (40b) is configured to enable automatic operation of the starter motor (46) for engine starting, and to enable automatic delivery of fuel and ignition to the aircraft engine (100) for engine starting and running, by the same single setting of the operator control input device.

11. The system as recited in one of claims 1-10, wherein the controller (40b) is configured to automatically stop the operation of the starter motor (46) with no additional operator input.

12. A method for operating a system comprising an aircraft engine (100), a starter motor (46), an engine fuel delivery system (48), an engine ignition system (44), and a controller (40b) communicatively coupled to the starter motor (46), engine fuel delivery system (48), engine ignition system (44) and an operator control input device (25) coupled to the controller (40b), the method comprising:
automatically initiating, by the controller (40b), operation of the starter motor (46) as needed to start the aircraft engine (100) while the aircraft engine is not running,
performing, by the controller (40b), the automatically initiating operation of the starter motor (46) and automatically providing fuel and ignition to the aircraft engine (100) in a first mode, and a stopping the operation of the starter motor (46) and stopping fuel and ignition from being provided to the aircraft engine (100) based on an operator-selectable control input received from the operator control input device (25) in a second mode, wherein the operator control input device (25) having one setting corresponding to the first mode, another setting corresponding to the second mode, and
initiating, by the controller (40b), operation of the starter motor (46) but disabling the providing of fuel and ignition to the aircraft engine (100) based on an input received from the operator control input device (25) in a third mode, wherein the operator control input device (25) has respective settings corresponding to the first, second, and third modes.

13. The method according to claim 12, wherein the method is for initiating operation of a starter motor (46) for starting an aircraft engine (100) in flight, the method comprising:
(a) detecting that the aircraft engine (100) has stopped running;
(b) automatically sending a command to initiate operation of the starter motor (46) after detecting that the aircraft engine (100) has stopped running and specified conditions are met;
(c) automatically initiating operation of the starter motor (46) in response to receipt of the command
(d) automatically regulating the fuel supplied to the aircraft engine (100); and
(e) automatically sending a command to initiate ignition of the fuel being supplied to the aircraft engine (100),
wherein operation (d) is performed while the starter motor (46) is operating, and operation (e) is performed while the starter motor (46) is operating and the fuel supplied to the aircraft engine (100) is being regulated.

14. The method as recited in claim 13, wherein operation of the starter motor (46) is initiated automatically based on airspeed and altitude being within respective specified ranges.

15. The method as recited in one of claims 13-14, wherein operation of the starter motor (46) is initiated automatically if engine sensor data is not within a specified range before an engine start is in progress or while an engine start is in progress and the starter motor (46) is not currently operating.

## Patentansprüche

1. System umfassend einen Flugzeugmotor (100), einen Startermotor (46), ein Triebwerkskraftstoffzufuhrsystem (48), ein Triebwerkszündsystem (44) und eine Steuereinheit (40b), die kommunikativ mit dem Startermotor (46), dem Triebwerkskraftstoffzufuhrsystem (48), dem Triebwerkszündsystem (44) verbunden ist, und eine Bedienereingabevorrichtung (25), die mit der Steuereinheit (40b) verbunden ist, wobei die Steuereinheit (40b) so konfiguriert ist, dass sie bei Bedarf automatisch den Betrieb des Startermotors (46) einleitet, um den Flugzeugmotor (100) zu starten, während der Flugzeugmotor nicht läuft,
wobei die Steuereinheit (40b) so konfiguriert ist, dass sie bei Bedarf automatisch den Betrieb des Startermotors (46) einleitet, um den Flugzeugmotor (100) zu starten, während der Flugzeugmotor nicht läuft, wobei die Steuereinheit (40b) einen zweiten Modus aufweist, in dem die Steuereinheit (40b) den Betrieb des Startermotors (46) stoppt und die Versorgung des Flugzeugmotors (100) mit Kraftstoff und Zündung auf der Grundlage einer vom Bediener auswählbaren Steuereingabe, die von der Bedienereingabevorrichtung (25) empfangen wird, stoppt, wobei die Bedienereingabevorrichtung (25) eine Einstellung aufweist, die dem ersten Modus entspricht, eine andere Einstellung, die dem zweiten Modus entspricht, und einen dritten Modus, in dem die Steuereinheit (40b) den Betrieb des Startermotors (46) einleitet, aber die Kraftstoffzufuhr und die Zündung des Flugzeugmotors (100) deaktiviert, basierend auf einer von der Bedienereingabevorrichtung (25) empfangenen Eingabe, und wobei die Bedienereingabevorrichtung (25) jeweilige Einstellungen aufweist, die dem ersten, zweiten und dritten Modus entsprechen.

2. System nach Anspruch 1, wobei die Steuereinheit so konfiguriert ist, dass sie den Betrieb des Startermotors (46) automatisch einleitet, wenn er durch eine vom Bediener auswählbare Steuereingabe, die von der Bedienereingabevorrichtung (25) empfangen wird, freigegeben wird.

3. System nach einem der Ansprüche 1-2, wobei die Steuereinheit (40b) so konfiguriert ist, dass sie automatisch den Betrieb des Startermotors (46) für den Flugzeugmotor (100), das während des Fluges nicht läuft, einleitet.

4. System nach einem der Ansprüche 1-3, wobei die Steuereinheit (40b) so konfiguriert ist, dass sie den Betrieb des Startermotors (46) während des Flugs automatisch einleitet, wenn die Fluggeschwindigkeit und die Flughöhe innerhalb der jeweiligen festgelegten Bereiche liegen.

5. System nach einem der Ansprüche 1-4, wobei die Steuereinheit (40b) so konfiguriert ist, dass sie den Betrieb des Startermotors (46) während des Fluges automatisch einleitet, wenn die Triebwerkssensordaten nicht innerhalb eines bestimmten Bereichs liegen, bevor ein Triebwerksstart durchgeführt wird oder während ein Triebwerksstart durchgeführt wird und der Startermotor (46) gerade nicht in Betrieb ist.

6. System nach einem der Ansprüche 1-5, wobei die Steuereinheit (40b) so konfiguriert ist, dass sie den Startermotor (46) am Boden automatisch betätigt.

7. System nach einem der Ansprüche 1-6, wobei die Steuereinheit (40b) so konfiguriert ist, dass sie den Betrieb des Startermotors (46) am Boden automatisch einleitet, wenn die erfasste Leistung, die für den Betrieb des Startermotors (46) zur Verfügung steht, über einem Schwellenwert liegt, und wobei ein Bediener eine Meldung erhält, wenn die erfasste Leistung, die für den Betrieb des Startermotors (46) zur Verfügung steht, nicht über dem Schwellenwert liegt.

8. System nach einem der Ansprüche 1-7, wobei die Steuereinheit (40b) so konfiguriert ist, dass sie den Betrieb des Startermotors (46) am Boden automatisch einleitet, wenn eine oder mehrere der folgenden Zustandsprüfungen bestanden werden: Triebwerkssensordaten, Startermotor (46), Triebwerkskraftstoffzufuhrsystem (48), Triebwerkszündsystem (44) und/oder Triebwerkssteuerungsfunktion, weiter wobei dem Bediener eine Meldung angezeigt wird, wenn eine zur Einleitung des Triebwerksstarts erforderliche Gesundheitsprüfung nicht bestanden wird.

9. System nach einem der Ansprüche 1-8, wobei die Steuereinheit (40b) so konfiguriert ist, dass sie dem Flugzeugmotor (100) automatisch Kraftstoff und Zündung zum Anlassen des Triebwerks ohne zusätzliche Bedienereingabe bereitstellt, während der Startermotor (46) in Betrieb ist.

10. System nach einem der Ansprüche 1-9, wobei die Steuereinheit (40b) so konfiguriert ist, dass sie den automatischen Betrieb des Startermotors (46) zum Starten des Triebwerks und die automatische Zufuhr von Kraftstoff und Zündung zum Flugzeugmotor (100) zum Starten und Betreiben des Triebwerks durch dieselbe einzelne Einstellung der Bedienereingabevorrichtung ermöglicht.

11. System nach einem der Ansprüche 1-10, wobei die Steuereinheit (40b) so konfiguriert ist, dass sie den Betrieb des Startermotors (46) ohne zusätzliche Bedienereingabe automatisch stoppt.

12. Verfahren zum Betreiben eines Systems, das einen Flugzeugmotor (100), einen Startermotor (46), ein Triebwerkskraftstoffzufuhrsystem (48), ein Triebwerkszündsystem (44) und eine Steuereinheit (40b) umfasst, die kommunikativ mit dem Startermotor (46), dem Triebwerkskraftstoffzufuhrsystem (48), dem Triebwerkszündsystem (44) und einer mit der Steuereinheit (40b) gekoppelten Bedienereingabevorrichtung (25) verbunden ist, wobei das Verfahren Folgendes umfasst:
automatisches Einleiten des Betriebs des Startermotors (46) durch die Steuereinheit (40b) bei Bedarf, um das Flugzeugmotor (100) zu starten, während der Flugzeugmotor nicht läuft,
Ausführen des automatisch einleitenden Betriebs des Startermotors (46) durch die Steuereinheit (40b) und
automatisches Bereitstellen von Kraftstoff und Zündung für den Flugzeugmotor (100) in einem ersten Modus, und Stoppen des Betriebs des Startermotors (46) und Stoppen der Bereitstellung von Kraftstoff und Zündung für den Flugzeugmotor (100) auf der Grundlage einer vom Bediener auswählbaren Steuereingabe, die von der Bedienereingabevorrichtung (25) empfangen wird, in einem zweiten Modus, wobei die Bedienereingabevorrichtung (25) eine Einstellung aufweist, die dem ersten Modus entspricht, eine andere Einstellung, die dem zweiten Modus entspricht, und
Einleiten des Betriebs des Startermotors (46) durch die Steuereinheit (40b), aber Deaktivieren der Kraftstoffzufuhr und der Zündung des Flugzeugmotors (100) auf der Grundlage einer von der Bedienereingabevorrichtung (25) in einem dritten Modus empfangenen Eingabe, wobei die Bedienereingabevorrichtung (25) jeweilige Einstellungen aufweist, die dem ersten, zweiten und dritten Modus entsprechen.

13. Verfahren nach Anspruch 12, wobei das Verfahren zum Einleiten des Betriebs eines Startermotors (46) zum Starten eines Flugzeugmotors (100) im Flug dient, wobei das Verfahren Folgendes umfasst:
(a) Erkennen, dass der Flugzeugmotor (100) nicht mehr läuft;
(b) automatisches Senden eines Befehls zum Einleiten des Betriebs des Startermotors (46), nachdem erkannt wurde, dass der Flugzeugmotor (100) nicht mehr läuft und bestimmte Bedingungen erfüllt sind;
(c) automatisches Einleiten des Betriebs des Startermotors (46) als Reaktion auf den Empfang des Befehls;
(d) automatisches Anpassen des dem Flugzeugmotor (100) zugeführten Kraftstoffs; und
(e) automatisches Senden eines Befehls zur Einleitung der Zündung des dem Flugzeugmotor (100) zugeführten Kraftstoffs,
wobei der Vorgang (d) durchgeführt wird, während der Startermotor (46) in Betrieb ist, und der Vorgang (e) durchgeführt wird, während der Startermotor (46) in Betrieb ist und der dem Flugzeugmotor (100) zugeführte Kraftstoff angepasst wird.

14. Verfahren nach Anspruch 13, wobei der Betrieb des Startermotors (46) automatisch eingeleitet wird, wenn die Fluggeschwindigkeit und die Flughöhe innerhalb der jeweiligen festgelegten Bereiche liegen.

15. Verfahren nach einem der Ansprüche 13-14, wobei der Betrieb des Startermotors (46) automatisch eingeleitet wird, wenn die Triebwerkssensordaten nicht innerhalb eines festgelegten Bereichs liegen, bevor ein Triebwerksstart durchgeführt wird oder während ein Triebwerksstart durchgeführt wird und der Startermotor (46) gerade nicht in Betrieb ist.

## Revendications

1. Système comprenant un moteur (100) d'aéronef, un moteur de démarrage (46), un système (48) d'alimentation de moteur en carburant, un système (44) d'allumage de moteur, et un dispositif de commande (40b) relié de façon communicante au moteur de démarrage (46), au système (48) d'alimentation de moteur en carburant, au système (44) d'allumage de moteur et à un dispositif (25) d'entrée de commande d'opérateur relié au dispositif de commande (40b), le dispositif de commande (40b) étant configuré pour déclencher automatiquement le fonctionnement du moteur de démarrage (46) si nécessaire pour démarrer le moteur (100) d'aéronef lorsque le moteur d'aéronef ne tourne pas,
dans lequel le dispositif de commande (40b) présente un premier mode dans lequel le dispositif de commande déclenche automatiquement le fonctionnement du moteur de démarrage (46) et fournit automatiquement du carburant et un allumage au moteur (100) d'aéronef, et dans lequel le dispositif de commande (40b) présente un deuxième mode dans lequel le dispositif de commande (40b) arrête le fonctionnement du moteur de démarrage (46) et arrête la fourniture de carburant et d'un allumage au moteur (100) d'aéronef en fonction d'une entrée de commande sélectionnable par opérateur reçue en provenance du dispositif (25) d'entrée de commande d'opérateur, dans lequel le dispositif (25) d'entrée de commande d'opérateur présente un réglage correspondant au premier mode, un autre réglage correspondant au deuxième mode et un troisième mode dans lequel le dispositif de commande (40b) déclenche le fonctionnement du moteur de démarrage (46), mais désactive la fourniture de carburant et d'un allumage au moteur (100) d'aéronef, en fonction d'une entrée reçue en provenance du dispositif (25) d'entrée de commande d'opérateur, et dans lequel le dispositif (25) d'entrée de commande d'opérateur présente des réglages respectifs correspondant aux premier, deuxième et troisième modes.

2. Système selon la revendication 1, dans lequel le dispositif de commande est configuré pour déclencher automatiquement le fonctionnement du moteur de démarrage (46) lorsqu'il est activé par une entrée de commande sélectionnable par opérateur reçue en provenance du dispositif (25) d'entrée de commande d'opérateur.

3. Système selon l'une des revendications 1 à 2, dans lequel le dispositif de commande (40b) est configuré pour déclencher automatiquement le fonctionnement du moteur de démarrage (46) pour le moteur (100) d'aéronef qui ne tourne pas en vol.

4. Système selon l'une des revendications 1 à 3, dans lequel le dispositif de commande (40b) est configuré pour déclencher automatiquement le fonctionnement du moteur de démarrage (46) en vol sur la base d'une vitesse et d'une altitude se situant dans des plages spécifiées respectives.

5. Système selon l'une des revendications 1 à 4, dans lequel le dispositif de commande (40b) est configuré pour déclencher automatiquement le fonctionnement du moteur de démarrage (46) en vol si des données de capteur de moteur ne se situent pas dans une plage spécifiée avant qu'un démarrage de moteur ne soit en cours ou pendant qu'un démarrage de moteur est en cours et que le moteur de démarrage (46) n'est pas en cours de fonctionnement.

6. Système selon l'une des revendications 1 à 5, dans lequel le dispositif de commande (40b) est configuré pour faire fonctionner automatiquement le moteur de démarrage (46) au sol.

7. Système selon l'une des revendications 1 à 6, dans lequel le dispositif de commande (40b) est configuré pour déclencher automatiquement le fonctionnement du moteur de démarrage (46) au sol si la puissance détectée disponible pour faire fonctionner le moteur de démarrage (46) est supérieure à une valeur seuil, et dans lequel un opérateur reçoit une invite d'indication si la puissance détectée disponible pour faire fonctionner le moteur de démarrage (46) n'est pas supérieure à la valeur seuil.

8. Système selon l'une des revendications 1 à 7, dans lequel le dispositif de commande (40b) est configuré pour déclencher automatiquement le fonctionnement du moteur de démarrage (46) au sol si un ou plusieurs des contrôles de santé suivants sont réussis : données de capteur de moteur, moteur de démarrage (46) de moteur, système (48) d'alimentation de moteur en carburant, système (44) d'allumage de moteur et/ou fonction de dispositif de commande de moteur, dans lequel un opérateur reçoit une invite d'indication si un quelconque contrôle de santé pour déclencher le démarrage du moteur n'est pas réussi.

9. Système selon l'une des revendications 1 à 8, dans lequel le dispositif de commande (40b) est configuré pour fournir automatiquement du carburant et un allumage au moteur (100) d'aéronef pour démarrer le moteur sans entrée d'opérateur supplémentaire pendant que le moteur de démarrage (46) fonctionne.

10. Système selon l'une des revendications 1 à 9, dans lequel le dispositif de commande (40b) est configuré pour permettre le fonctionnement automatique du moteur de démarrage (46) pour le démarrage du moteur et pour permettre l'alimentation automatique en carburant et en allumage du moteur (100) d'aéronef pour le démarrage et la marche du moteur, par le même réglage unique du dispositif d'entrée de commande d'opérateur.

11. Système selon l'une des revendications 1 à 10, dans lequel le dispositif de commande (40b) est configuré pour arrêter automatiquement le fonctionnement du moteur de démarrage (46) sans aucune entrée d'opérateur supplémentaire.

12. Procédé permettant de faire fonctionner un système comprenant un moteur (100) d'aéronef, un moteur de démarrage (46), un système (48) d'alimentation de moteur en carburant, un système (44) d'allumage de moteur et un dispositif de commande (40b) relié de façon communicante au moteur de démarrage (46), au système (48) d'alimentation de moteur en carburant, au système (44) d'allumage de moteur et un dispositif (25) d'entrée de commande d'opérateur relié au dispositif de commande (40b), le procédé comprenant :
le déclenchement automatique, par le dispositif de commande (40b), du fonctionnement du moteur de démarrage (46) si nécessaire pour démarrer le moteur (100) d'aéronef lorsque le moteur d'aéronef ne tourne pas,
la mise en oeuvre, par le dispositif de commande (40b), du déclenchement automatique du fonctionnement du moteur de démarrage (46) et
la fourniture automatique de carburant et d'un allumage au moteur (100) d'aéronef dans un premier mode, et l'arrêt du fonctionnement du moteur de démarrage (46) et l'arrêt de l'alimentation en carburant et en allumage du moteur (100) d'aéronef sur la base d'une entrée de commande sélectionnable par opérateur reçue en provenance du dispositif (25) d'entrée de commande d'opérateur dans un deuxième mode, dans lequel le dispositif (25) d'entrée de commande d'opérateur présente un réglage correspondant au premier mode, un autre réglage correspondant au deuxième mode, et
le déclenchement, par le dispositif de commande (40b), du fonctionnement du moteur de démarrage (46) mais la désactivation de la fourniture de carburant et d'allumage au moteur (100) d'aéronef sur la base d'une entrée reçue en provenance du dispositif (25) d'entrée de commande d'opérateur dans un troisième mode, dans lequel le dispositif (25) d'entrée de commande d'opérateur présente des réglages respectifs correspondant aux premier, deuxième et troisième modes.

13. Procédé selon la revendication 12, dans lequel le procédé est destiné à déclencher le fonctionnement d'un moteur de démarrage (46) pour démarrer un moteur (100) d'aéronef en vol, le procédé comprenant :
(a) la détection du fait que le moteur (100) d'aéronef ne tourne plus ;
(b) l'envoi automatique d'une instruction pour déclencher le fonctionnement du moteur de démarrage (46) après avoir détecté que le moteur (100) d'aéronef ne tourne plus et que des conditions spécifiées sont remplies ;
(c) le déclenchement automatique du fonctionnement du moteur de démarrage (46) en réponse à la réception de l'instruction
(d) la régulation automatique du carburant fourni au moteur (100) d'aéronef ; et
(e) l'envoi automatique d'une instruction pour déclencher un allumage du carburant fourni au moteur (100) d'aéronef,
dans lequel l'opération (d) est mise en oeuvre pendant que le moteur de démarrage (46) fonctionne, et l'opération (e) est mise en oeuvre pendant que le moteur de démarrage (46) fonctionne et que le carburant fourni au moteur (100) d'aéronef est en cours de régulation.

14. Procédé selon la revendication 13, dans lequel le fonctionnement du moteur de démarrage (46) est déclenché automatiquement sur la base d'une vitesse et d'une altitude se situant dans des plages spécifiées respectives.

15. Procédé selon l'une des revendications 13 à 14, dans lequel le fonctionnement du moteur de démarrage (46) est déclenché automatiquement si les données de capteur de moteur ne se situent pas dans une plage spécifiée avant qu'un démarrage du moteur soit en cours ou pendant qu'un démarrage du moteur est en cours et que le moteur de démarrage (46) n'est pas en cours de fonctionnement.
